# EUROPÄISCHE PATENTSCHRIFT

(11) **EP 2 108 509 B1**
(45) Veröffentlichungstag und Bekanntmachung des Hinweises auf die Patenterteilung: **02.05.2012**
(21) Anmeldenummer: 09156011.0
(22) Anmeldetag: 24.03.2009
(51) Int. Cl.: B32B 21/06, B65D 63/10

(54) **Mehrlagiges Papierband**
Multi-layered sticky tape
Bande de papier multicouche

(30) Priorität: 09.04.2008 DE 102008018031
(43) Veröffentlichungstag der Anmeldung: 14.10.2009
(73) Patentinhaber: GarnTec GmbH, 67468 Neidenfels (DE)
(72) Erfinder: Eispert, Karl-Heinz, 67659 Kaiserslautern (DE); Schönung, Thomas, 67482 Freimersheim (DE)
(74) Vertreter: Schön, Christoph

(56) Entgegenhaltungen:
- EP-A- 0 727 376
- WO-A-2004/063462
- DE-A1- 19 537 829
- DE-A1- 19 721 683
- GB-A- 324 326
- GB-A- 468 485
- GB-A- 475 774
- GB-A- 632 709
- US-A1- 2005 186 417

## Beschreibung

Die vorliegende Erfindung betrifft ein mehrlagiges Papierband, das zur Ausbildung von Transportgutumreifungen, wie Paketen, Zellstoffballen, Paletten usw., verwendet werden kann.

Die DE 197 21 683 A1 beschreibt einen zur Ausbildung eines Frachtpakets dienenden Verpackungsbehälter aus einem Pappe-Karton-Werkstoff, wobei der Verpackungsbehälter mit einer verbundenen, verschleiß- und reißfesten Umschnürung zum Verschluss und Zusammenhalt des verpackungsbehälters ausgerüstet ist, wobei die Umschnürung als mehrlagig gefaltetes Flachband ausgebildet ist.

Es hat sich jedoch gezeigt, dass die in der DE 197 21 683 A1 beschriebene Umschnürung keine ausreichende Festigkeit bei gleichzeitig guter Dehnbarkeit besitzt. Ferner weist die in der DE 197 21 683 A1 beschriebene Umschnürung keine Antirutscheigenschaft auf.

Aufgabe der vorliegenden Erfindung ist es folglich, eine biologisch abbaubare Umschnürung bereitzustellen, die eine ausreichende Festigkeit bei gleichzeitig akzeptabler Dehnbarkeit aufweist und gleichzeitig ausreichende Antirutscheigenschaften bietet, um einerseits ein Verrutschen der Umschnürung zu verhindern und andererseits bei Stapelgut ein Verrutschen der oberen Lagen zu vermeiden.

Gegenstand der vorliegenden Erfindung ist ein mehrlagiges Papierband gemäß Patentanspruch 1. Weitere bevorzugte Ausführungsformen sind in der Unteransprüchen 2 bis 6 beschrieben.

Gegenstand eines weiteren Aspekts der vorliegenden Erfindung ist ein Verfahren zur Herstellung eines mehrlagigen Papierbands gemäß Patentanspruch 7.

Der Gegenstand der vorliegenden Erfindung ist nachstehend anhand eines zeichnerisch veranschaulichten Ausführungsbeispiels näher erläutert. Es zeigt:
Fig. 1 einen Abschnitt des erfindungsgemäßen mehrlagigen Papierbands in schaubildlicher Darstellung und
Fig. 2 eine isolierte Darstellung des in die gefaltete Papierlage eingelegten Stapels aus Papierlagen und Klebstoffschichten.
Fig. 3 einen mit dem erfindungsgemäßen mehrlagigen Papierband horizontal umreiften Zellstoffballen.

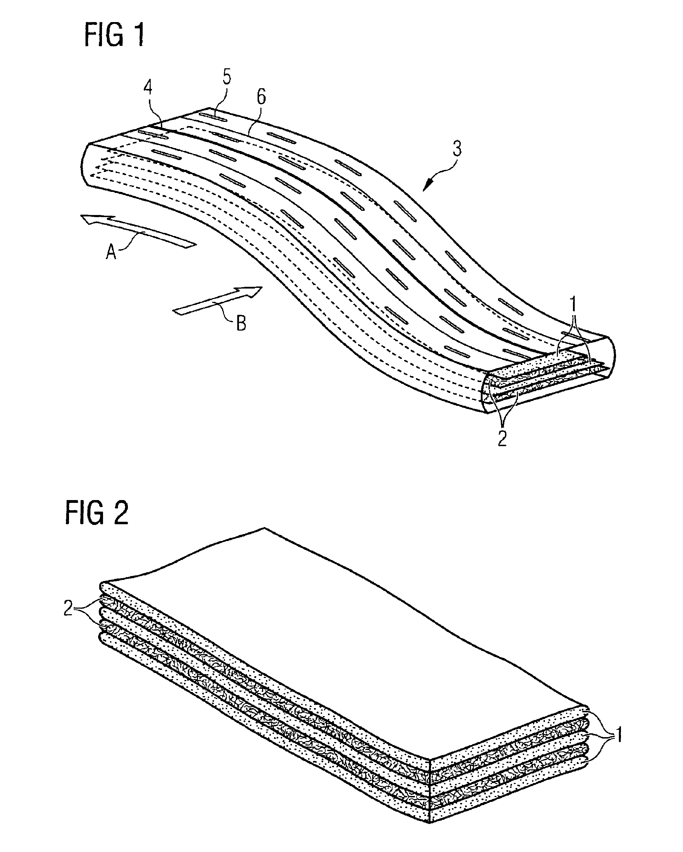

Das erfindungsgemäße mehrlagige Papierband umfasst üblicherweise zwei oder mehr, vorzugsweise 3 bis 10, insbesondere 4 bis 6 Papierlagen (2), die durch zwischen jeweils zwei Papierlagen befindliche Klebstoffschichten (1) verbunden sind. Die oberste bzw. unterste Schicht dieses Stapels an Papierlagen und Klebstoffschichten bildet jeweils eine Klebstoffschicht. Um diese Klebstoffschichten herum ist als Mantel eine gefaltete Papierlage (3) ausgebildet, die den Stapel aus Papierlagen und Klebstoffschichten umschließt. Die Stosskante (4) der als Mantel fungierenden Papierlage wird dabei üblicherweise so angeordnet, dass sie in Längsrichtung des Papierbandes (Richtung A in Fig. 1) auf der Ober- oder Unterseite (=der breiten Seite) des Papierbandes, bevorzugt mittig auf der Ober- oder Unterseite des Papierbandes verläuft (siehe beispielsweise Fig. 1). Ferner kann das Gebilde aus Papierlagenmantel, in den mehrere Papierlagen eingefügt sind,
eine oder mehrere Gruppen, vorzugsweise zwei oder mehr Gruppen, von Verpressungen (6) und/oder Perforationen (5) aufweisen. Diese können auf der Ober- und/oder Unterseite des Papierbandes ausgebildet sein. Die Verpressungen (6) werden üblicherweise in das erfindungsgemäße Papierband eingearbeitet, um die Steifigkeit des erfindungsgemäßen Papierbandes zu verbessern. Überraschenderweise wurde festgestellt, dass bei Einarbeitung von Perforationen die Dehnungseigenschaften des erfindungsgemäßen Papierbandes erhöht werden können. Die Verpressungen (6) und/oder Perforationen (5) können parallel zur Stoßkante des erfindungsgemäßen Papierbandes oder in einem bestimmten Winkel dazu über die gesamte Länge des Papierbandes oder lediglich über einige Abschnitte des Papierbandes verlaufen. Vorzugsweise sind die Verpressungen (6) und/oder Perforationen (5) über die gesamte Länge des Papierbandes ausgebracht. In einer bevorzugten Ausführungsform der vorliegenden Erfindung weist das erfindungsgemäße Papierband zwei Gruppen von in Längsrichtung parallel zueinander verlaufenden Perforationen auf, wobei die beiden Gruppen von Perforationen in Querrichtung zueinander versetzt sind. Werden in das erfindungsgemäße Papierband beispielsweise in Längsrichtung (Richtung A) verlaufende Perforationen eingearbeitet, lässt sich die Dehnbarkeit des erfindungsgemäßen Papierbandes erhöhen. So wurde beispielsweise durch Einarbeitung von zwei Gruppen von Perforationen einer Länge von 0,2 bis 2 cm, die in Längsrichtung 0,5 bis 3 cm, vorzugsweise 0,8 bis 2 cm, und in Querrichtung 1 bis 8 mm, vorzugsweise 3 bis 6 mm, voneinander beabstandet sind, wobei die beiden Gruppen von Perforationen in Querrichtung zueinander versetzt sind, eine um 100 % verbesserte Dehnung (d.h. Erhöhung der Dehnung des erfindungsgemäßen Papierbandes von 4% auf 8%) erreicht. Die Verpressungen (6) werden üblicherweise mit einer Prägevorrichtung, beispielsweise einem Markierungsrad und/oder Prägerad, in das Papierband eingearbeitet. Die Perforationen (5) werden üblicherweise mit einer Perforationsvorrichtung, beispielsweise einem Perforationsrad, in das Papierband eingearbeitet. Die Tiefe der Verpressungen (6) beträgt üblicherweise 0,01 bis 1,4 mm, vorzugsweise 0,1 bis 0,4 mm. Die Abstände der Verpressungen (6) in Querrichtung betragen üblicherweise 0,1 bis 5 mm, vorzugsweise von 2 bis 4 mm auf. Die Abstände der Perforationen (5) betragen in Längsrichtung (Richtung A in Fig. 1) üblicherweise 0,5 bis 3 cm, vorzugsweise 0,8 bis 2 cm, und in Querrichtung (Richtung B in Fig. 1) üblicherweise 1 bis 8 mm, vorzugsweise von 3 bis 6 mm auf. Bei den Perforationen kann es sich um punktförmige Perforationen oder um sich in eine Richtung, beispielsweise in Längsrichtung, erstreckende Perforationen, die beispielsweise eine Länge von 0,2 bis 2 cm, vorzugsweise eine Länge von 0,5 bis 1,5 cm aufweisen, handeln. Das Gebilde aus der gegebenenfalls Verpressungen und/oder Perforationen aufweisenden, gefalteten Papierlage, in die mehrere Papierlagen eingefügt sind, ist ganzheitlich von einer Klebstoffschicht unter Ausbildung einer geschlossenen Außenhaut umgeben.

Bei den verwendeten Klebstoffen handelt es sich beispielsweise um Leim oder einen Vinylacetatklebstoff, insbesondere einen Vinylacetatklebstoff.

Die Papierlagen weisen üblicherweise eine Breite zwischen 1 und 100 mm, vorzugsweise 5 bis 50 mm, insbesondere 10 bis 30 mm auf.

Die Dicke der Papierlagen beträgt üblicherweise 20 bis 800 µm, vorzugsweise 100 und 500 µm, insbesondere 200 bis 300 µm.

Die Dicke der Klebstoffschichten beträgt üblicherweise 5 bis 100 µm, vorzugsweise 10 bis 60 µm, insbesondere 30 bis 50 µm. Die Gesamtdicke des erfindungsgemäßen mehrlagigen Papierbands beträgt üblicherweise 0,01 bis 5 mm, vorzugsweise 0,1 bis 2 mm, insbesondere 1,0 bis 1,5 mm.

Die erfindungsgemäß verwendete Papierlage besteht üblicherweise aus Holzstoff, Halbzellstoff oder Zellstoff, vorzugsweise Langfaserzellstoff.

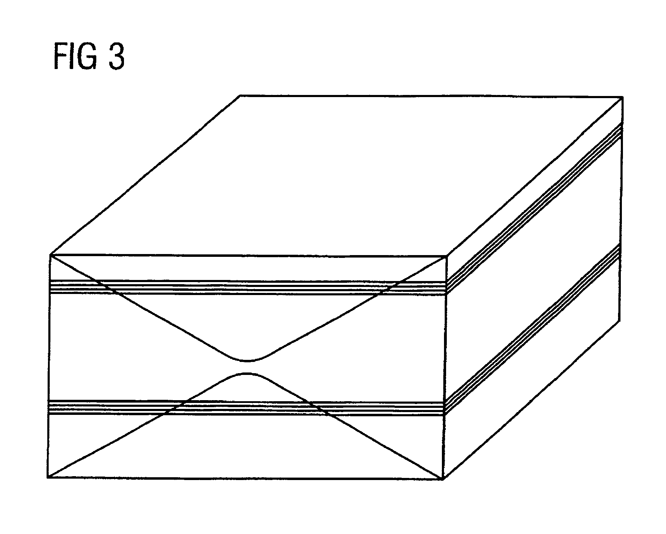

Durch die Gegenwart einer Klebstoffschicht als Außenhaut des erfindungsgemäßen Papierbands erhält das erfindungsgemäße Papierband eine rutschhemmende Eigenschaft, so dass das erfindungsgemäße Papierband auch zur horizontalen Umschnürung von Gegenständen verwendet werden kann (siehe beispielsweise Fig. 3). Ferner wirkt sich die rutschhemmende Eigenschaft des erfindungsgemäßen Papierbandes auch positiv auf den Weitertransport aus, da durch die Verwendung eines erfindungsgemäßen Papierbands eine Beschädigung durch Transportmaschinen vermieden werden kann, wie z.B. bei Rollentransportbahnen oder durch Staplergabeln.

Gegenstand eines weiteren Aspekts der vorliegenden Erfindung ist ein Verfahren zur Herstellung eines erfindungsgemäßen Papierbands, das die folgenden Stufen umfasst:
1) Verkleben einzelner Papierlagen mittels Klebstoff zu einem mehrlagigen Papierlagenstapel, wobei die oberste und unterste Schicht jeweils Klebstoffschichten sind;
2) Umfaltung des Papierlagenstapels mit einer Papierlage; und
3) Ausbilden einer Klebstoffschicht in Form einer geschlossenen Außenhaut auf dem mit einer Papierlage umfalteten Papierlagenstapel.

In einer bevorzugten Ausführungsform umfasst das Verfahren zur Herstellung eines erfindungsgemäßen Papierbandes die zusätzliche Stufe eines Verpressens und /oder Perforierens des in obiger Stufe 2 erhaltenen Papierbandes.

Wie oben ausgeführt, besteht die erfindungsgemäß verwendete Papierlage üblicherweise aus Holzstoff, Halbzellstoff oder Zellstoff. Aus diesen Materialien werden Bahnen geeigneter Breite, beispielsweise einer Breite von 5 bis 50 mm, ausgeschnitten. Anschließend werden die sog. "Bobinen" üblicherweise mit Klebstoff beaufschlagt, übereinander gelegt und verpresst. Wie oben ausgeführt, werden gewöhnlich zwei oder mehr Papierlagen übereinander angeordnet. Das Übereinanderlegen der Papierlagen kann beispielsweise unter Verwendung einer handelsüblichen Bandherstellungsvorrichtung erfolgen. Das erhaltene Gebilde weist als oberste bzw. unterste Schicht eine Klebstoffschicht auf. Anschließend wird dieser Papierlagenstapel mit einer Papierlage geeigneter Größe umfaltet und danach verpresst. Danach kann das erhaltene Gebilde beispielsweise mithilfe eines Präge- oder Markierungsrades und/oder mithilfe eines Perforationsrades verpresst oder perforiert werden. Anschließend wird das erhaltene Gebilde mit einer Außenhaut aus Klebstoff überzogen. Die Aufbringung kann beispielsweise durch eine Tauchbehandlung erfolgen. Anschließend wird die Außenklebstoffschicht getrocknet und gehärtet, beispielsweise unter Verwendung von Heizstrahlern. Durch nachfolgendes Kühlen der Oberflächenschicht kann ein Aufeinanderkleben der Außenhaut beim Aufwickeln des mehrlagigen Papierbandes verhindert werden.

Nachfolgend wird die vorliegende Erfindung anhand eines Beispiels beschrieben. Dieses Beispiel dient lediglich der Veranschaulichung und soll das in den Patentansprüchen definierte mehrlagige Papierband in keiner Weise einschränken.

Zur Herstellung des in dem vorliegenden Beispiel beschriebenen mehrlagigen Papierbands wurde handelsüblicher Langfaserzellstoff (Packpapier mit einem Flächengewicht von 160 g/m²) als Ausgangsmaterial verwendet. Aus Bahnen dieses Langfaserzellstoffs wurden anschließend an einem Rollenschneider in Streifen mit einer Breite von 19 mm bzw. 39 mm geschnitten. Diese so genannten "Bobinen" wurden in das Abrollgatter einer handelsüblichen Bandmaschine eingehängt und nacheinander in die Bandmaschine eingeführt. Im beschriebenen Beispielsfall wurden 4 Bänder einer Breite von 19 mm und ein Band mit einer Breite von 39 mm als Umfaltung verwendet. Alle diese Papierbänder wurden über mehrere Umlenkeinheiten durch Leimauftragstationen, die mit handelsüblichem Leim (Leim mit der Bezeichnung DL 100 von der Firma Türmer) befüllt waren, geführt, anschließend übereinander positioniert, miteinander verpresst und die schützende Außenlage mithilfe eines Falters um den Papierstapel gelegt. Danach wurde auf das Band mithilfe eines Markierungsrades bzw. eines Perforationsrades zwei Längsverpressungen und zwei Gruppen von Längsperforationen derart aufgebracht, dass die zwei Gruppen von Perforationen in Längsrichtung parallel zueinander verlaufen und in Querrichtung versetzt zueinander verlaufen (Länge der Perforationen: 1 cm, Abstand in Längsrichtung: 1 cm, Abstand in Querrichtung: 5 mm, Tiefe der Verpressungen auf Ober- und Unterseite: 0,2 mm). Anschließend wurde das Papierband nochmals durch eine Leimauftragsstation gezogen, um eine rutschhemmende Außenschicht zu erzeugen. Um das komplette Papierbandgebilde zu versteifen und in Form zu halten, wurde anschließend das erhaltene mehrlagige Papierband mit Hilfe von Heizstrahlern (Mittelfrequenz-Infrarot-Carbonstrahler) fixiert und getrocknet. Das anschließende Abkühlen im tänzergesteuerten Kühlgatter verhinderte das Aneinanderkleben der rutschhemmenden Außenhaut beim Aufwickeln auf einen vordefinierten Pappkern.

## Patentansprüche

1. Mehrlagiges Papierband, das zwei oder mehr Papierlagen umfasst, die durch Klebstoffschichten verbunden sind, wobei die oberste bzw. unterste Schicht dieses Stapels an Papierlagen und Klebstoffschichten jeweils von einer Klebstoffschicht gebildet wird, um die herum als Mantel eine gefaltete Papierlage ausgebildet ist, die den Stapel aus Papierlagen und Klebstoffschichten umschließt, **dadurch gekennzeichnet, dass** die gefaltete Papierlage vollständig von einer Klebstoffschicht umgeben ist, dass das mehrlagige Papierband zwei Gruppen von in Längsrichtung parallel zueinander verlaufenden Perforationen aufweist, wobei die beiden Gruppen von Perforationen in Querrichtung zueinander versetzt sind, und dass das mehrlagige Papierband zusätzlich Verpressungen auf der Ober- und/oder Unterseite aufweist.

2. Mehrlagiges Papierband nach Anspruch 1, das eine Gesamtdicke von 1,0 bis 1,5 mm aufweist.

3. Mehrlagiges Papierband nach Anspruch 1 oder 2, das 4 bis 6 Papierlagen umfasst.

4. Mehrlagiges Papierband nach einem der Ansprüche 1 bis 3, wobei die Schichtdicke der Papierlagen in einem Bereich von 200 bis 300 µm liegt.

5. Mehrlagiges Papierband nach einem der Ansprüche 1 bis 4, wobei die Verpressungen eine Tiefe von 0,01 bis 1,4 mm und einen Abstand in Querrichtung von 0,1 bis 5 mm aufweisen.

6. Mehrlagiges Papierband nach einem der Ansprüche 1 bis 5, wobei zwei Gruppen von Perforationen eine Länge von 0,2 bis 2 cm aufweisen, die in Längsrichtung 0,5 bis 3 cm und in Querrichtung 1 bis 8 mm voneinander beabstandet sind.

7. Verfahren zur Herstellung eines mehrlagigen Papierbandes nach Anspruch 1, das die folgenden Stufen umfasst:
1. Verkleben einzelner Papierlagen mittels Klebstoff zu einem mehrlagigen Papierlagenstapel, wobei die oberste und unterste Schicht jeweils Klebstoffschichten sind;
2. Umfaltung des Papierlagenstapels mit einer Papierlage;
3. Perforieren und Verpressen des Papierlagenstapels; und
4. Ausbilden einer Klebstoffschicht in Form einer geschlossenen Außenhaut auf dem mit einer Papierlage umfalteten Papierlagenstapel.

## Claims

1. Multi-ply paper strip comprising two or more paper sheets which are bonded together by adhesive layers, the top and bottom layers of said stack of paper sheets and adhesive layers both being adhesive layers, around which a folded paper sheet is provided as a casing enclosing said stack of paper sheets and adhesive layers, **characterised in that** said folded paper sheet is completely surrounded by an adhesive layer, **in that** the multi-ply paper strip has two sets of perforations extending longitudinally in parallel, the two sets of perforations being transversely mutually offset, and **in that** the multi-ply paper strip additionally has indentations on the upper and/or lower side.

2. Multi-ply paper strip according to claim 1, having a total thickness of 1.0 to 1.5 mm.

3. Multi-ply paper strip according to either claim 1 or claim 2, comprising 4 to 6 paper sheets.

4. Multi-ply paper strip according to any one of claims 1 to 3, wherein the thickness of the layers of said paper sheets falls within a range of from 200 to 300 µm.

5. Multi-ply paper strip according to any one of claims 1 to 4, wherein the indentations are from 0.01 to 1.4 mm deep and spaced from 0.1 to 5 mm apart transversely.

6. Multi-ply paper strip according to any one of claims 1 to 5, wherein two sets of perforations of from 0.2 to 2 cm in length are spaced from 0.5 to 3 cm apart longitudinally and from 1 to 8 mm apart transversely.

7. Process for producing a multi-ply paper strip according to claim 1, comprising the following stages:
1. bonding individual paper sheets by means of an adhesive to form a multi-ply stack of paper sheets, wherein the top and bottom layers of the stack are both adhesive layers;
2. folding a paper sheet around the stack of paper sheets;
3. perforating and indenting the stack of paper sheets; and
4. forming an adhesive layer in the form of a closed outer skin on the stack of paper sheets surrounded by a folded paper sheet.

## Revendications

1. Bande de papier multicouche, laquelle comprend deux ou plusieurs couches de papier reliées par des couches de colle, la couche supérieure ou inférieure de cet empilement de couches de papier et de couches de colle étant formée dans chaque cas par une couche de colle autour de laquelle est réalisée une couche de papier pliée formant la surface extérieure entourant l'empilement de couches de papier et de couches de colle, **caractérisée en ce que** la couche de papier pliée est entièrement entourée par une couche de colle, **en ce que** la bande de papier multicouche comporte deux groupes de perforations orientés parallèlement entre eux dans le sens longitudinal, lesdits deux groupes de perforations étant décalés l'un par rapport à l'autre dans le sens transversal, et **en ce que** la bande de papier multicouche comporte, en plus, des compressions sur la face supérieure et/ou la face inférieure.

2. Bande de papier multicouche selon la revendication 1, laquelle possède une épaisseur totale de 1,0 à 1,5 mm.

3. Bande de papier multicouche selon la revendication 1 ou 2, laquelle comprend 4 à 6 couches de papier.

4. Bande de papier multicouche selon l'une quelconque des revendications 1 à 3, dans laquelle l'épaisseur des couches de papier se situe dans une plage de 200 à 300 µm.

5. Bande de papier multicouche selon l'une quelconque des revendications 1 à 4, dans laquelle les compressions ont une profondeur de 0,01 à 1,4 mm et sont écartées dans le sens transversal d'une distance de 0,1 à 5 mm.

6. Bande de papier multicouche selon l'une quelconque des revendications 1 à 5, dans laquelle deux groupes de perforations ont une longueur de 0,2 à 2 cm, lesquelles sont écartées les unes des autres de 0,5 à 3 cm dans le sens longitudinal et de 1 à 8 mm dans le sens transversal.

7. Procédé pour la réalisation d'une bande de papier multicouche selon la revendication 1, lequel comprend les étapes suivantes :
1. assemblage par collage de différentes couches de papier au moyen d'une colle pour obtenir un empilement de plusieurs couches de papier, la couche supérieure et la couche inférieure étant formées dans chaque cas par une couche de colle ;
2. pliage d'une couche de papier autour de l'empilement de couches de papier ;
3. perforation et compression de l'empilement de couches de papier ; et
4. réalisation d'une couche de colle sous la forme d'une peau extérieure fermée sur l'empilement de couches de papier entouré d'une couche de papier pliée.
